# DEMANDE DE BREVET EUROPEEN

(11) **EP 4 744 969 A1**
(43) Date de publication de la demande: **20.05.2026**
(21) Numéro de dépôt: 25207742.5
(22) Date de dépôt: 09.10.2025
(51) Int. Cl.: B60R 19/52

(54) **SOUS-ENSEMBLE DE PARE CHOCS AVANT INTÉGRANT MOYENS D'INTERFACAGE POUR LE MONTAGE D'UN OBTURATEUR DERRIÈRE LA GRILLE D'ADMISSION D'AIR**

(30) Priorité: 19.11.2024 FR 2412626
(71) Demandeur: Stellantis Auto SAS, 78300 Poissy (FR)
(72) Inventeur: PERON, Rodolphe, 95220 HERBLAY (FR); BOUDAN, Julien, 91210 DRAVEIL (FR)
(74) Mandataire: BCIP

(57) **Abrégé**

L'invention concerne un sous-ensemble de pare-chocs avant de véhicule automobile, comportant une peau extérieure, une grille d'admission d'air (200) implantée au niveau d'une ouverture ménagée dans la partie inférieure de ladite peau extérieure et comprenant une bordure périphérique (220) rapportée fixement contre cette peau extérieure sur le pourtour de ladite ouverture, ainsi qu'un déflecteur d'air (300) s'étendant en-dessous de ladite grille d'admission d'air (200) et présentant une portion avant logée dans le volume intérieur défini par la portion inférieure de ladite peau extérieure ;
caractérisé en ce que la portion avant dudit déflecteur (300) et la portion supérieure de la bordure périphérique (220) de ladite grille d'admission d'air (200) comportent respectivement des premiers moyens d'interfaçage (323) et des seconds moyens d'interfaçage aptes à permettre le montage d'un obturateur (400) derrière une partie de ladite grille d'admission d'air (200).

## Description

### [Domaine technique]

La présente invention concerne la problématique de la régulation du flux d'air entrant de refroidissement d'un véhicule automobile. Elle vise en particulier un sous-ensemble de pare-chocs avant intégrant des moyens d'interfaçage pour le montage d'un obturateur derrière la grille d'admission d'air.

### [Technique antérieure]

La régulation du flux d'air entrant de refroidissement d'un véhicule automobile est généralement assurée par au moins une première entrée d'air dite voie basse ménagée sur la peau de bouclier avant du véhicule et s'étendant verticalement entre les poutres des renforts inférieur et supérieur de pare-chocs avant de ce véhicule.

Ainsi, lorsque le véhicule se déplace, une quantité d'air plus ou moins frais est reçue à l'intérieur du compartiment moteur via la grille d'admission d'air implantée au niveau d'une ouverture ménagée dans la partie inférieure de la peau extérieure de pare-chocs avant du véhicule.

Les besoins en air frais des véhicules automobiles dépendent grandement du type de propulsion qu'ils mettent en œuvre.

Les véhicules à propulsion thermique dotés d'un moteur à combustion interne sont ainsi pourvus d'un circuit de refroidissement liquide dit haute température (HT) dédié au refroidissement de ce moteur et ayant des températures pouvant atteindre et temporairement dépasser 120°C en fonctionnement, et 140°C en coup de chaud, avec localement jusqu'à 160 à 180°C, par exemple dans un carter de turbine du turbocompresseur.

Les véhicules à propulsion purement électrique sont quant à eux dépourvus d'un tel circuit haute température et comprennent seulement un circuit de refroidissement dit basse température (BT) dédié au refroidissement des organes de la chaîne de traction électrique (machines électriques, électronique de puissance, onduleurs, convertisseurs, chargeur de batterie, etc.) et présentant des températures de fonctionnement comprises généralement entre 60 à 90°C.

La quantité d'air frais devant pénétrer dans le véhicule pour alimenter les échangeurs de ces différents circuits de refroidissement varie ainsi grandement en fonction du type de propulsion du véhicule.

Sachant que cette entrée d'air frais a pour effet de dégrader le coefficient de traînée aérodynamique SCx du véhicule proportionnément à la surface de l'ouverture recevant la grille d'admission d'air, on comprend que pour un modèle de véhicule donné, il puisse être avantageux de réduire sensiblement les dimensions de cette ouverture et de cette grille pour les versions à propulsion électrique afin d'optimiser leur autonomie et de réduire leurs émissions de CO2.

Un dimensionnement spécifique de ces éléments pour les véhicules à propulsion électrique implique ainsi une multiplication du nombre de références à gérer pour le constructeur automobile, entrainant une augmentation sensible des coûts de stockage et de gestion logistique, d'autant qu'il s'agit d'éléments de grandes dimensions.

Il est connu, du document FR 3 156 158 A1, de prévoir, derrière une portion latérale de la grille d'amission d'air, un obturateur comprenant un panneau épousant la forme de cette grille de sorte à se placer au plus près de cette dernière et bloquer l'arrivée d'air.

Cet obturateur est fixé par l'intermédiaire de pattes d'attache supérieure et inférieure aux poutres des renforts inférieur et supérieur de pare-chocs avant.

Malheureusement, en cas de choc entre un piéton et l'avant du véhicule, un tel obturateur constitue un point dur pouvant entrainer des risques de blessures au bassin et/ou aux parties supérieures des jambes (zones fémur) de ce piéton.

Afin de limiter ces risques de blessures, des zones de rupture frangibles peuvent être prévues sur les pattes d'attache mais leur efficacité s'avère limitée.

### [Exposé de l'invention]

La présente invention vise à améliorer la situation.

Elle propose à cet effet un sous-ensemble de pare-chocs avant de véhicule automobile, comportant une peau extérieure, une grille d'admission d'air implantée au niveau d'une ouverture ménagée dans la partie inférieure de ladite peau extérieure et comprenant une bordure périphérique rapportée fixement contre cette peau extérieure sur le pourtour de ladite ouverture, ainsi qu'un déflecteur d'air s'étendant en-dessous de ladite grille d'admission d'air et présentant une portion avant logée dans le volume intérieur défini par la portion inférieure de ladite peau extérieure ;
caractérisé en ce que la portion avant dudit déflecteur et la portion supérieure de la bordure périphérique de ladite grille d'admission d'air comportent respectivement des premiers moyens d'interfaçage et des seconds moyens d'interfaçage aptes à permettre le montage d'un obturateur derrière une partie de ladite grille d'admission d'air.

Le sous-ensemble de pare-chocs avant selon l'invention offre ainsi la possibilité de réduire la quantité d'air frais entrant dans le véhicule en permettant d'y monter un obturateur derrière une partie de sa grille d'admission d'air.

L'invention permet ainsi d'utiliser une unique référence de peau extérieure et de grille d'admission d'air pour les versions à propulsion thermique et électrique d'un même modèle de véhicule automobile.

Par ailleurs, l'implantation des moyens d'interfaçage d'un tel l'obturateur sur la grille d'admission d'air et sur la portion avant du déflecteur permet à cet obturateur d'accompagner le mouvement de recul de ces deux éléments en cas de choc entre un piéton et l'avant du véhicule, de sorte à ne pas constituer de point dur pour le bassin et/ou les parties supérieures des jambes de ce piéton.

Selon des caractéristiques préférées dudit sous-ensemble de pare-chocs avant selon l'invention :
- lesdits premiers moyens d'interfaçage comportent deux fenêtres d'interfaçage écartées transversalement l'une de l'autre et prévues pour être traversées par des pieds de calage correspondants d'un dit obturateur ;
- lesdites fenêtres d'interfaçage présentent une forme de trapèze isocèle s'évasant vers l'arrière ;
- lesdites fenêtres d'interfaçage sont pourvues d'un bord périphérique chanfreiné ;
- lesdits seconds moyens d'interfaçage comportent au moins une fente d'interfaçage prévue pour coopérer par encliquetage avec une languette de clippage correspondante d'un dit obturateur ;
- la portion supérieure de la bordure périphérique de ladite grille d'admission d'air présente, dans le prolongement arrière de chaque dite fente d'interfaçage, un avaloir de guidage correspondant ;
- ledit sous-ensemble de pare-chocs avant comporte en outre un dit obturateur, monté fixement derrière une portion de ladite grille d'admission d'air, et comprenant un panneau dont la face avant présente en section verticale transversale un profil incurvé concave épousant celui de ladite grille d'admission d'air ;
- ledit obturateur comporte deux jambages saillant en dessous dudit panneau et comprenant à leurs extrémités inférieures respectives deux pieds de calage insérés au travers des deux dites fenêtres d'interfaçage ;
- l'un desdits pieds de calage présente une largeur transversale identique à celle de la portion la plus étroite de ladite fenêtre d'interfaçage correspondante ; et/ou
- ledit obturateur comporte au moins une languette de clippage coopérant par encliquetage avec une dite au moins une fente d'interfaçage correspondante.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
- [Fig 1] représente une vue partielle de coupe en perspective, prise selon un plan de coupe longitudinal vertical, de la partie latérale droite d'un sous-ensemble de pare-chocs avant selon l'invention sur lequel est monté un obturateur ;
- [Fig 2] est une vue en perspective de trois quart arrière de l'obturateur seul ;
- [Fig 3] représente une vue illustrant une première étape du montage de l'obturateur sur le sous-ensemble de pare-chocs avant de la figure 1 ;
- [Fig 4] est une vue en perspective de trois quart arrière de la partie avant droite du déflecteur du sous-ensemble de pare-chocs avant de la figure 1 ; et
- [Fig 5] est une vue en perspective de trois quart avant de la zone de fixation de la partie supérieure de l'obturateur sur le dessus de la grille d'admission d'air du sous-ensemble de pare-chocs avant de la figure 1.

### [Description détaillée]

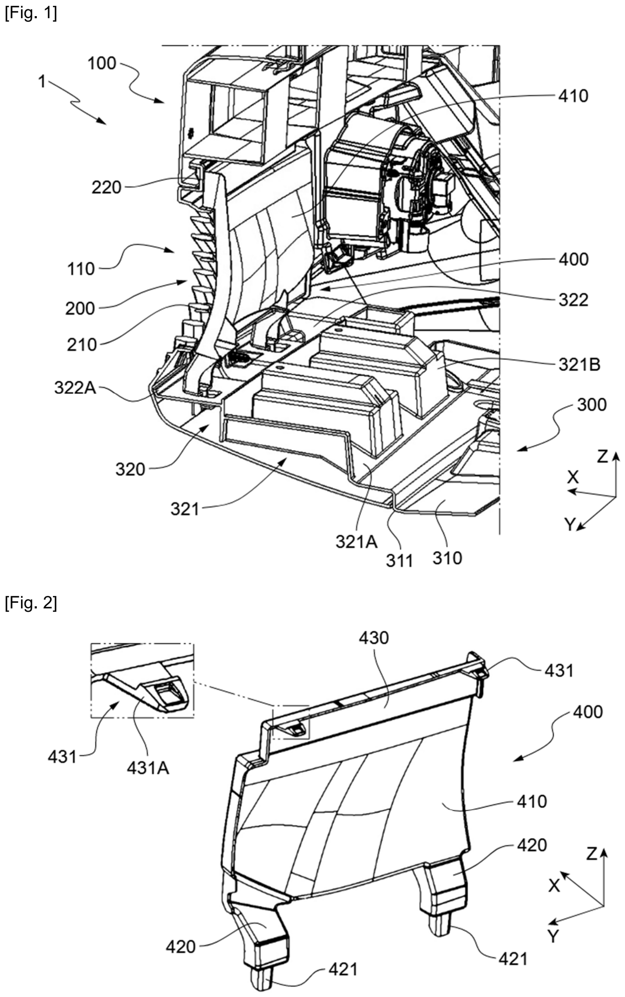

La figure 1 représente un sous-ensemble de pare-chocs avant 1 selon l'invention pour un véhicule automobile.

Par convention, on définit par rapport à ce sous-ensemble de pare-chocs avant 1, un repère orthogonal XYZ comprenant trois axes perpendiculaires deux à deux, à savoir :
- un axe X, définissant une direction longitudinale horizontale, parallèle au sol et confondu avec la direction générale de déplacement du véhicule ;
- un axe Y, définissant une direction transversale horizontale, également parallèle au sol et qui avec l'axe X définit un plan XY horizontal ; et
- un axe Z, définissant une direction verticale, perpendiculaire au sol et au plan XY horizontal.

Dans la suite de la description et en référence au repère défini ci-dessus, les termes « longitudinal » ou « longitudinalement » feront référence à une direction parallèle à l'axe X, les termes « transversal » ou « transversalement » feront référence à une direction parallèle à l'axe Y, et les termes « vertical » ou « verticalement » feront référence à une direction parallèle à l'axe Z.

D'autre part, les termes « avant » et « arrière » seront utilisés pour préciser le positionnement longitudinal de certains éléments relativement à l'orientation de l'axe X pointant par convention vers l'avant. De même, les termes « supérieur » et « inférieur » seront utilisés pour préciser la position relative de certains éléments relativement à l'orientation de l'axe Z pointant par convention vers le haut.

Enfin, le terme « sensiblement » indiquera qu'un léger écart est admis par rapport à une position ou disposition nominale prédéterminée, tout en restant inclus dans le cadre de l'invention. Par exemple, « sensiblement vertical » indique qu'un écart de l'ordre de 15 à 20° par rapport à une orientation strictement verticale est admis dans le cadre de l'invention.

En référence à la figure 1, le sous-ensemble de pare-chocs avant 1 comporte une peau extérieure 100, réalisée classiquement à partir d'une ou plusieurs pièces venues chacune de moulage dans un matériau thermoplastique, et peinte avantageusement du même coloris que la carrosserie du véhicule. Cette peau extérieure 100 est prévue pour se déformer facilement en cas de choc piéton de sorte à absorber une partie de l'énergie de ce choc.

Le sous-ensemble de pare-chocs avant 1 comporte également une grille d'admission d'air 200 implantée au niveau d'une ouverture 110 ménagée dans la partie inférieure de la peau extérieure 100 et réalisée classiquement à partir d'une ou plusieurs pièces venues chacune de moulage dans un matériau thermoplastique.

Cette grille 200 comprend classiquement une pluralité de lamelles 210 agencées de sorte à former un maillage autorisant le passage de l'air tout empêchant celui de corps étrangers extérieurs qui pourraient endommager certains organes du véhicule situés à l'arrière.

La grille d'admission d'air 200 est rapportée fixement sur la peau extérieure de pare-chocs avant 100 par l'intermédiaire de moyens d'encliquetage non visibles agencés le long de sa bordure périphérique 220 et coopérant avec des moyens complémentaires ménagés sur le pourtour arrière de l'ouverture 110.

Le sous-ensemble de pare-chocs avant 1 comporte en outre un déflecteur d'air 300 réalisé classiquement à partir d'une ou plusieurs pièces venues chacune de moulage dans un matériau thermoplastique.

Ce déflecteur 300 comprend une semelle 310 s'étendant selon un plan moyen sensiblement horizontal en partie inférieure du véhicule de sorte à définir sa garde au sol, et présentant un bord avant 311 rapporté fixement par encliquetage contre et le long du bord inférieur arrière de la peau extérieure 100.

Ce déflecteur 300 comprend également une portion avant 320 prolongeant la semelle 310 vers l'avant et venant se loger dans le volume intérieur défini par la portion inférieure de la peau extérieure 100. Cette portion avant 320 comporte une zone d'absorption d'énergie 321 formée par une alternance, selon une direction transversale, de parois de liaison 321A et de caissons creux 321B propres ensemble à se déformer pour absorber une partie de l'énergie d'un choc subi par le véhicule à l'avant, par exemple avec un piéton.

Au-devant de cette zone d'absorption d'énergie 321, la portion avant 320 comprend également une avancée 322 formant l'extrémité avant du déflecteur 300 et présentant un bord avant recourbé 322A reposant contre la peau extérieure 100 juste en dessous de la grille d'admission d'air 200.

Toujours en référence à la figure 1, le sous-ensemble de pare-chocs avant 1 peut par ailleurs comporter un obturateur 400 venant se monter fixement derrière une portion latérale de la grille d'admission d'air 200 (en l'occurrence la portion droite).

Représenté seul sur la figure 2, cet obturateur 400 comprend un panneau 410 dont la face avant présente en section verticale transversale un profil incurvé concave épousant celui de cette grille d'admission 200, de sorte à se placer au plus près de cette dernière et bloquer l'arrivée d'air.

L'obturateur 400 comporte également deux jambages 420 saillant en dessous du panneau 410 depuis ses deux extrémités latérales et comprenant à leurs extrémités inférieures respectives deux pieds de calage 421.

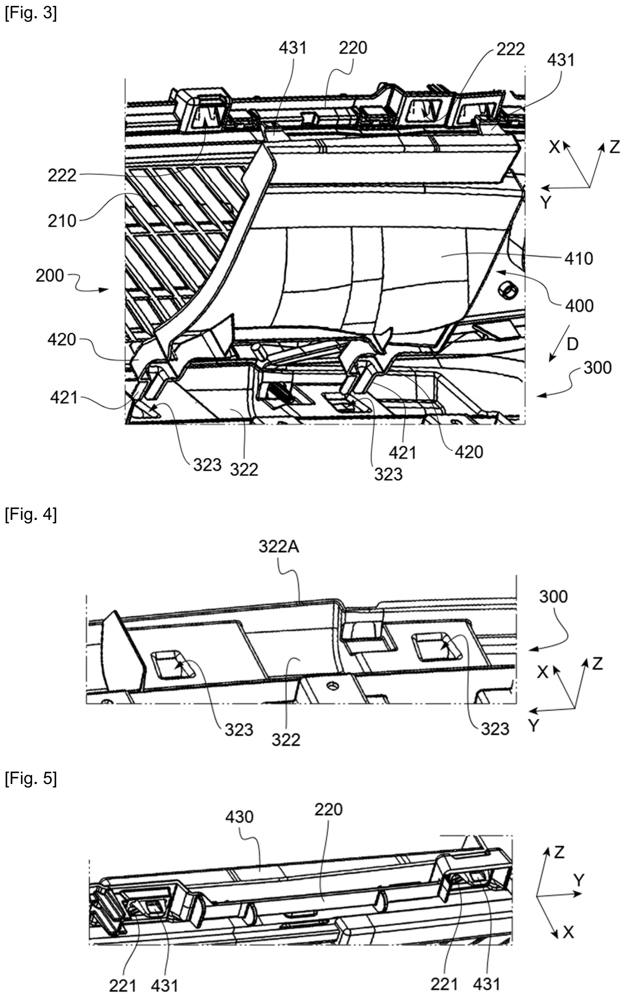

Présentant en section un profil en forme de U, ces deux pieds de calage 421, identiques, sont destinés à venir s'insérer, lors du montage de cet obturateur 400 et tel qu'illustré par la figure 3, dans deux fenêtres d'interfaçage correspondantes 323 ménagées sur l'avancée 322 du déflecteur 300 et écartées transversalement l'une de l'autre.

Mieux visibles sur la figure 4, les fenêtres d'interfaçage 323 présentent chacune une profondeur longitudinale identique à celle du pied de calage correspondant 421, de sorte à assurer un indexage longitudinal sans jeu de la partie inférieure de l'obturateur 400 vis-à-vis de ce déflecteur 300.

Ces deux fenêtres d'interfaçage 323 présentent en outre une forme de trapèze isocèle s'évasant vers l'arrière de sorte à faciliter, tel qu'illustré par la figure 3, l'insertion simultanée à coulissement au travers de celles-ci des deux pieds de calage 421 selon une direction de montage D orientée en biais du haut vers le bas et de l'arrière vers l'avant.

Toujours dans le but de faciliter l'insertion des pieds de calage 421 au travers des fenêtres d'interfaçage 323, ces dernières sont avantageusement pourvues d'un bord périphérique chanfreiné.

L'un des pieds de calage 421 (en l'espèce celui situé le plus à gauche sur la figure 3) présente en outre une largeur transversale identique à celle de la portion d'extrémité avant la plus étroite de la fenêtre d'interfaçage correspondante 323, de sorte à assurer un indexage transversal sans jeu de l'obturateur 400 vis-à-vis de ce déflecteur 300.

Afin d'absorber les dispersions dimensionnelles dues aux tolérances normales de fabrication du déflecteur 300 et de l'obturateur 400, la portion d'extrémité avant la plus étroite de l'autre fenêtre d'interfaçage 323 (celle située le plus à droite sur la figure 3) présente quant à elle une largeur transversale légèrement supérieure à celle du pied de calage correspondant 421. Cette différence de largeur est avantageusement comprise entre un et cinq millimètres.

En référence de nouveau à la figure 2, l'obturateur 400 comporte en outre un bandeau supérieur 430 s'étendant au-dessus et le long du panneau incurvé 410, et venant en regard de la portion supérieure de la bordure périphérique 220 de la grille d'admission d'air 200. Cet obturateur 400 comporte par ailleurs au moins une languette de clippage 431 saillant au-devant de ce bandeau supérieur 430.

Tel qu'illustré par la figure 5, chaque languette de clippage 431 est destinée à coopérer par encliquetage, lors du rabattage à pivotement vers le haut et vers l'avant de l'obturateur 400 après l'insertion des pieds de calage 421 dans les fenêtres d'interfaçage 323, avec une fente d'interfaçage correspondante 221 ménagée dans la portion supérieure de la bordure périphérique 220 de la grille d'admission d'air 200.

Afin de lui assurer une meilleure stabilité une fois montée, l'obturateur 400 comporte de préférence deux languettes de clippage 431 saillant au-devant de ce bandeau 430 depuis les deux extrémités latérales de son bord supérieur et destinées à coopérer par encliquetage avec deux fentes d'interfaçage correspondantes 221 ménagées dans la portion supérieure de la bordure périphérique 220 de la grille d'admission d'air 200 et écartées transversalement l'une de l'autre.

Comme cela est bien visible sur la figure 2, chaque languette de clippage 431 est pourvue à son extrémité libre d'une dent 431A formée d'une rampe s'inclinant vers l'arrière et vers le haut jusqu'à un redent de retenue destiné à coopérer en butée avec le pourtour avant d'une fente d'interfaçage correspondante 221, de sorte à assurer l'indexage longitudinal de la partie supérieure de l'obturateur 400 vis-à-vis de la grille d'admission d'air 200 (voir figure 5).

Les languettes de clippage 431 présentent chacune une épaisseur identique à la hauteur de la fente d'interfaçage correspondante 221, de sorte à assurer également l'indexage vertical de cet obturateur 400.

Tel qu'illustré par la figure 3 et afin de faciliter l'insertion des languettes de clippage 431 au travers des fentes d'interfaçage correspondantes 221, la portion supérieure de la bordure périphérique 220 de la grille d'admission d'air 200 présente, dans le prolongement arrière de chaque fente d'interfaçage 221, un avaloir de guidage correspondant 222.

Selon des variantes de réalisation non représentées, les moyens d'interfaçage ménagés respectivement sur la portion avant du déflecteur et sur la grille d'admission d'air pour permettre le montage d'un obturateur peuvent différer.

La grille d'admission d'air pourra par exemple ne comprendre qu'une seule fente d'interfaçage prévue pour coopérer par encliquetage avec une languette de clippage correspondante d'un obturateur.

De nombreuses variantes sont envisageables et on rappelle à cet égard que la présente invention ne se limite pas aux formes de réalisation décrites et représentées, mais englobe également toutes les variantes d'exécution à la portée de l'homme du métier.

## Revendications

1. Sous-ensemble de pare-chocs avant (1) de véhicule automobile, comportant une peau extérieure (100), une grille d'admission d'air (200) implantée au niveau d'une ouverture (110) ménagée dans la partie inférieure de ladite peau extérieure (100) et comprenant une bordure périphérique (220) rapportée fixement contre cette peau extérieure (100) sur le pourtour de ladite ouverture (110), ainsi qu'un déflecteur d'air (300) s'étendant en-dessous de ladite grille d'admission d'air (200) et présentant une portion avant (320) logée dans le volume intérieur défini par la portion inférieure de ladite peau extérieure (100) ;
**caractérisé en ce que** la portion avant (320) dudit déflecteur (300) et la portion supérieure de la bordure périphérique (200) de ladite grille d'admission d'air (200) comportent respectivement des premiers moyens d'interfaçage (323) et des seconds moyens d'interfaçage (221) aptes à permettre le montage d'un obturateur (400) derrière une partie de ladite grille d'admission d'air (200).

2. Sous-ensemble de pare-chocs avant (1) selon la revendication 1, **caractérisé en ce que** lesdits premiers moyens d'interfaçage comportent deux fenêtres d'interfaçage (323) écartées transversalement l'une de l'autre et prévues pour être traversées par des pieds de calage correspondants (421) d'un dit obturateur (400).

3. Sous-ensemble de pare-chocs avant (1) selon la revendication 2, **caractérisé en ce que** lesdites fenêtres d'interfaçage (323) présentent une forme de trapèze isocèle s'évasant vers l'arrière.

4. Sous-ensemble de pare-chocs avant (1) selon l'une des revendications 2 ou 3, **caractérisé en ce que** lesdites fenêtres d'interfaçage (323) sont pourvues d'un bord périphérique chanfreiné.

5. Sous-ensemble de pare-chocs avant (1) selon l'une des revendications 1 à 4, **caractérisé en ce que** lesdits seconds moyens d'interfaçage comportent au moins une fente d'interfaçage (221) prévue pour coopérer par encliquetage avec une languette de clippage correspondante (431) d'un dit obturateur (400).

6. Sous-ensemble de pare-chocs avant (1) selon la revendication 5, **caractérisé en ce que** la portion supérieure de la bordure périphérique (220) de ladite grille d'admission d'air (200) présente, dans le prolongement arrière de chaque dite fente d'interfaçage (221), un avaloir de guidage correspondant (222).

7. Sous-ensemble de pare-chocs avant (1) selon l'une des revendications 1 à 6, **caractérisé en ce qu'**il comporte en outre un dit obturateur (400), monté fixement derrière une portion de ladite grille d'admission d'air (200), et comprenant un panneau (410) dont la face avant présente en section verticale transversale un profil incurvé concave épousant celui de ladite grille d'admission d'air (200).

8. Sous-ensemble de pare-chocs avant (1) selon la revendication 7 en dépendance de l'une des revendications 2 à 4, **caractérisé en ce que** ledit obturateur (400) comporte deux jambages (420) saillant en dessous dudit panneau (410) et comprenant à leurs extrémités inférieures respectives deux pieds de calage (421) insérés au travers des deux dites fenêtres d'interfaçage (323).

9. Sous-ensemble de pare-chocs avant (1) selon la revendication 8, **caractérisé en ce que** l'un desdits pieds de calage (421) présente une largeur transversale identique à celle de la portion la plus étroite de ladite fenêtre d'interfaçage correspondante (323).

10. Sous-ensemble de pare-chocs avant (1) selon l'une des revendications 8 ou 9 en dépendance de l'une des revendications 5 ou 6, **caractérisé en ce que** ledit obturateur (400) comporte au moins une languette de clippage (431) coopérant par encliquetage avec une dite au moins une fente d'interfaçage correspondante (221).
